# EUROPEAN PATENT APPLICATION

(11) **EP 2 750 163 A1**
(43) Date of publication of application: **02.07.2014**
(21) Application number: 12824990.1
(22) Date of filing: 03.08.2012
(51) Int. Cl.: H01K 1/18

(54) **HALOGEN BULB LIGHT SOURCE FIXING FRAME AND BULB HAVING SAME**

(30) Priority: 23.08.2011 CN 201120308968 U
(71) Applicant: Jialong High-Tech Industrial Co., Ltd, Qinhuangdao, Hebei 066000 (CN); Jia, Weifeng, Qinhuangdao, Hebei 066000 (CN); Bai, Bin, Qinhuangdao, Hebei 066000 (CN)
(72) Inventor: JIA, Weifeng, Hebei 066000 (CN); BAI, Bin, Hebei 066000 (CN)
(74) Representative: Gulde & Partner
(86) International application number: PCT/CN2012/079654
(87) International publication number: WO 2013/026352

(57) **Abstract**

The present invention disclosed is a fixing frame of halogen bulb light source, comprising an upper U-shaped clamping portion and a lower spring structure connected thereto. The present invention further disclosed is a bulb having the fixing frame, comprising a stem, the fixing frame and a halogen bulb light source, the spring structure of the fixing frame is inserted into the stem, the U-shaped clamping portion of the fixing frame clamps the lower portion of the halogen bulb light source, and the halogen bulb light source is electrically connected to the stem. The fixing frame of halogen bulb light source of the present invention has a simple structure. When it is used to fix the halogen bulb light source, the halogen bulb light source is placed in the U-shaped clamping portion, and the spring structure of the fixing frame is inserted into the stem, so that the halogen bulb light source can be firmly fixed onto the stem, preventing the light source from offsetting during transportation. For the bulb having the fixing frame of the present invention, the mounting is secure and convenient, the cost is low and the service life is long.

## Description

### Field of the Invention

The present invention relates to a bulb, and particularly, to a fixing frame of halogen bulb light source and a bulb having the fixing frame.

### Background of the Invention

As a common illumination device, a halogen bulb is widely used in various illumination fields. The existing halogen bulbs all require a support to fix an internal halogen bulb light source. For example, in the halogen bulb products, a support made of ceramics is mostly used to fix the internal halogen bulb light source. In such structure, there are many position offsets of the light source after mounting due to the shakes in transportation or other external forces. In severe cases, the light source would break away from the support, causing the bulb to be scrapped.

### Summary of the Invention

The technical problem to be solved by the present invention is to provide a fixing frame of halogen bulb light source, which has a simple structure and enables a bulb light source to be firmly mounted, and a bulb having the fixing frame.

In order to solve the above problem, the following technical solutions are adopted in the present invention:

A fixing frame of halogen bulb light source, comprising an upper U-shaped clamping portion and a lower spring structure connected thereto.

In the fixing frame of halogen bulb light source according to a first embodiment of the present invention, wherein the U-shaped clamping portion comprises a first clamping bar, a second clamping bar and an arc-shaped bar connecting the bottoms of the first and second clamping bars, and the top of the first or second clamping bar is connected to a free end at the upper portion of the spring structure through a connection bar.

In the fixing frame of halogen bulb light source of the present invention, wherein the first and second clamping bars are individually composed of a first and second cross bars, a first and second inner vertical bars, a first and second slope bars, and a first and second outer vertical bars; the inner ends of the first and second cross bars are connected to the tops of the first and second inner vertical bars respectively, the lower ends of the first and second inner vertical bars are connected to the inner ends of the first and second slope bars respectively, the outer ends of the first and second slope bars are connected to the tops of the first and second outer vertical bars respectively, the bottoms of the first and second outer vertical bars are connected to the arc-shaped bar respectively, and the outer side of the first cross bar or the second cross bar is connected to a free end at the upper portion of the spring structure through a connection bar.

In the fixing frame of halogen bulb light source of the present invention, wherein the U-shaped clamping portion, the connection bar and the spring structure are all integrally formed by bending.

In the fixing frame of halogen bulb light source according to another embodiment of the present invention, wherein the U-shaped clamping portion comprises a first clamping bar and a second clamping bar, a free end at the lower portion of the spring structure is connected to the lower end of a first spiral connection bar through a first connection bar, and the upper end of the first spiral connection bar is connected to the lower end of the first clamping bar; while a free end at the upper portion of the spring structure is connected to the lower end of a second spiral connection bar through a second connection bar, and the upper end of the second spiral connection bar is connected to the lower end of the second camping bar.

In the fixing frame of halogen bulb light source of the present invention, wherein the first and second clamping bars are individually composed of a first and second upper cross bars, a first and second inner vertical bars, a first and second slope bars, a first and second outer vertical bars, and a first and second lower cross bars; the inner ends of the first and second upper cross bars are connected to the tops of the first and second inner vertical bars respectively, the lower ends of the first and second inner vertical bars are connected to the inner ends of the first and second slope bars respectively, the outer ends of the first and second slope bars are connected to the tops of the first and second outer vertical bars respectively, the bottoms of the first and second outer vertical bars are connected to the outer ends of the first and second lower cross bars respectively, the upper end of the first spiral connection bar is connected to the inner end of the first lower cross bar, and the upper end of the second spiral connection bar is connected to the inner end of the second lower cross bar.

In the fixing frame of halogen bulb light source of the present invention, wherein the U-shaped clamping portion, the first connection bar, the second connection bar, the first spiral connection bar, the second spiral connection bar and the spring structure are all integrally formed by bending.

A bulb having the fixing frame of halogen bulb light source of the present invention comprises a stem, the fixing frame and a halogen bulb light source, the spring structure of the fixing frame is inserted into the stem, the U-shaped clamping portion of the fixing frame clamps the lower portion of the halogen bulb light source, and the halogen bulb light source is electrically connected to the stem.

The fixing frame of halogen bulb light source of the present invention has a simple structure. When it is used to fix the halogen bulb light source, the halogen bulb light source is placed in the U-shaped clamping portion, and the spring structure of the fixing frame is inserted into the stem, so that the halogen bulb light source can be firmly fixed onto the stem, preventing the light source from offsetting in transportation. For the bulb having the fixing frame of the present invention, the mounting is secure and convenient, the cost is low and the service life is long.

### Brief Description of the Drawings

Fig. 1 is a stereo structure diagram of a fixing frame of halogen bulb light source according to a first embodiment of the present invention;
Fig. 2 is stereo structure diagram 1 of a fixing frame of halogen bulb light source according to a second embodiment of the present invention;
Fig. 3 is stereo structure diagram 2 of the fixing frame of halogen bulb light source according to the second embodiment of the present invention;
Fig. 4 is a stereo diagram of a bulb having the fixing frame of halogen bulb light source according to the present invention; and
Fig. 5 is a front view of a bulb having the fixing frame of halogen bulb light source according to the present invention.

### Detailed Description of the Preferred Embodiments

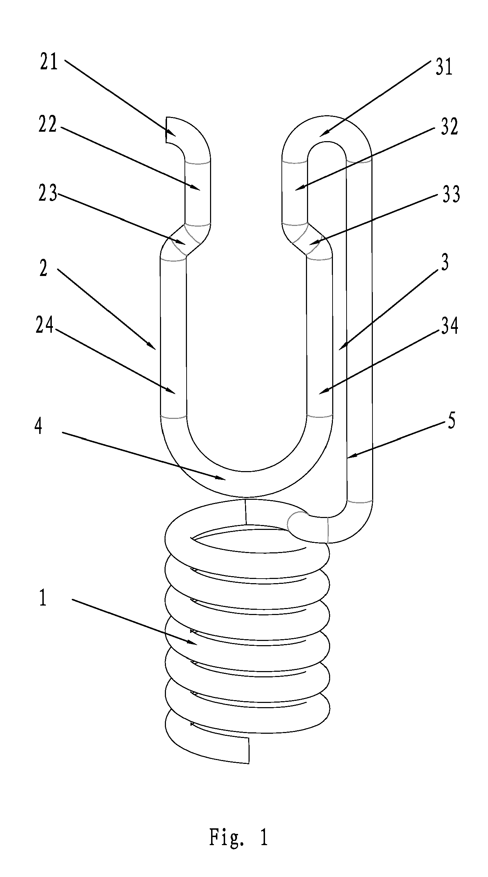

A fixing frame of halogen bulb light source according to a first embodiment of the present invention is illustrated in Fig. 1, comprising an upper U-shaped clamping portion and a lower spring structure 1. The U-shaped clamping portion comprises a first clamping bar 2, a second clamping bar 3 and an arc-shaped bar 4 connecting the bottoms of the first and second clamping bars 2, 3. The first and second clamping bars 2, 3 are individually composed of a first and second cross bars 21, 31, a first and second inner vertical bars 22, 32, a first and second slope bars 23, 33, and a first and second outer vertical bars 24, 34. The inner ends of the first and second cross bars 21, 31 are connected to the tops of the first and second inner vertical bars 22, 32 respectively. The lower ends of the first and second inner vertical bars 22, 32 are connected to the inner ends of the first and second slope bars 23, 33 respectively. The outer ends of the first and second slope bars 23, 33 are connected to the tops of the first and second outer vertical bars 24, 34 respectively. The bottoms of the first and second outer vertical bars 24, 34 are connected to two ends of the arc-shaped bar 4 respectively.

The outer side of the first cross bar 21 or the second cross bar 31 is connected to a free end at the upper portion of the spring structure 1 through a connection bar 5. The U-shaped clamping portion, the connection bar 5 and the spring structure 1 are all integrally formed by bending.

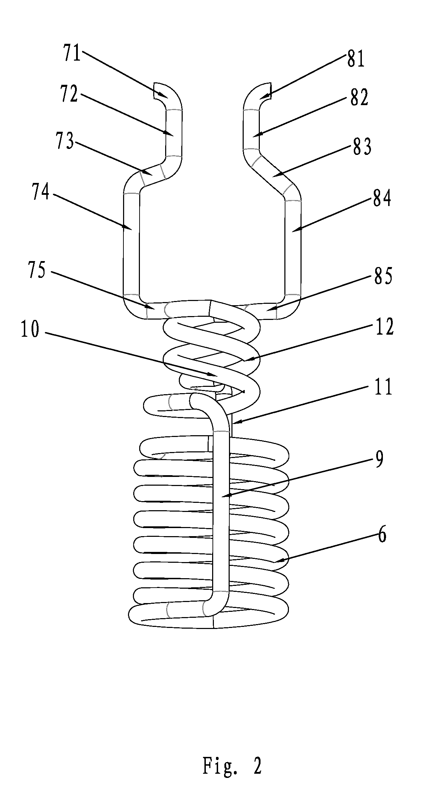

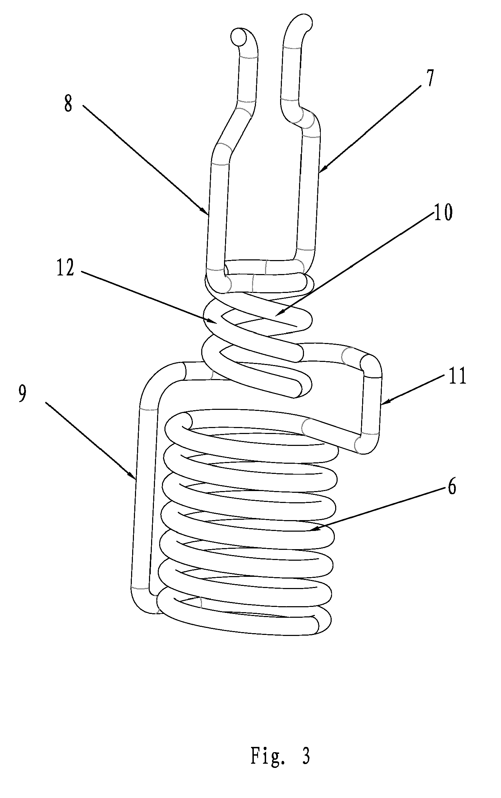

A fixing frame of halogen bulb light source according to a second embodiment of the present invention, as shown in Figs. 2-3, comprises an upper U-shaped camping portion and a lower spring structure 6. The U-shaped clamping portion comprises a first clamping bar 7 and a second clamping bar 8. The first and second clamping bars 7, 8 are individually composed of a first and second upper cross bars 71, 81, a first and second inner vertical bars 72, 82, a first and second slope bars 73, 83, a first and second outer vertical bars 74, 84, and a first and second lower cross bars 75, 85. The inner ends of the first and second upper cross bars 71, 81 are connected to the tops of the first and second inner vertical bars 72, 82 respectively. The lower ends of the first and second inner vertical bars 72, 82 are connected to the inner ends of the first and second slope bars 73, 83 respectively. The outer ends of the first and second slope bars 73, 83 are connected to the tops of the first and second outer vertical bars 74, 84 respectively. The bottoms of the first and second outer vertical bars 74, 84 are connected to the outer ends of the first and second lower cross bars 75, 85 respectively.

A free end at the lower portion of the spring structure 6 is connected to the lower end of a first spiral connection bar 10 through a first connection bar 9, and the upper end of the first spiral connection bar 10 is connected to the inner end of the first lower cross bar 75. A free end at the upper portion of the spring structure 6 is connected to the lower end of a second spiral connection bar 12 through a second connection bar 11, and the upper end of the second spiral connection bar 12 is connected to the inner end of the second lower cross bar 85.

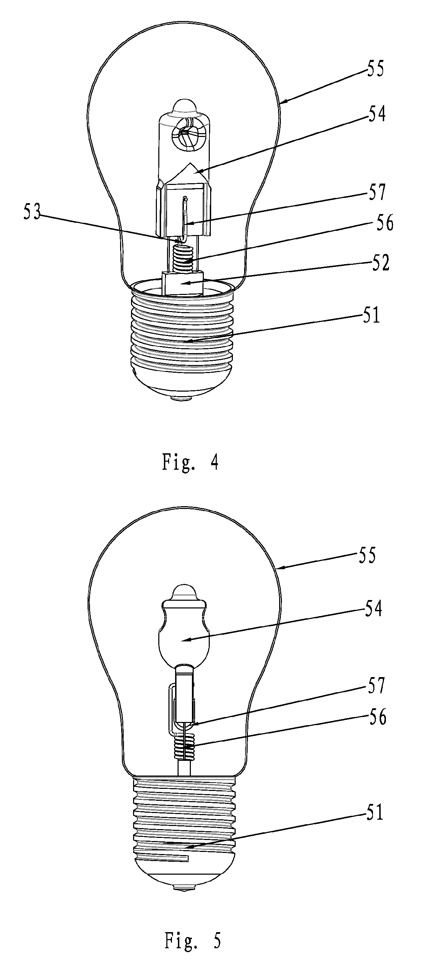

A bulb having the fixing frame of the first embodiment is shown in Figs. 4-5. The fixing frame of the second embodiment is connected to a stem and a halogen bulb light source in the same way as the fixing frame of the first embodiment. The bulb having the fixing frame of halogen bulb light source of the present invention comprises a bulb holder 51, a stem 52, a fixing frame 53, a halogen bulb light source 54 and a bulb housing 55. The bulb holder 51 is connected to the stem 52, a spring structure 56 of the fixing frame 53 is inserted into the stem 52, a U-shaped clamping portion 57 of the fixing frame 53 clamps the lower portion of the halogen bulb light source 54, and the halogen bulb light source 54 is electrically connected to the stem 52.

The above examples are just representation of the preferred embodiments of the present invention, and not intended to limit the scope of the present invention. Without departing the design spirit of the present invention, it will be appreciated by those skilled in the art that any modification and improvement to the technical solutions of the present invention shall fall within the protection scope determined by the claims of the present invention.

### Practical Applicability

The fixing frame of halogen bulb light source and the bulb having the fixing frame of the present invention are applicable to any situation where bulbs are used in various industries. Due to the firm and convenient mounting, low cost, without offset of the light source during transportation and long life, the bulb needs under various situations can be satisfied.

## Claims

1. A fixing frame of halogen bulb light source, comprising an upper U-shaped clamping portion and a lower spring structure connected thereto.

2. The fixing frame of halogen bulb light source according to claim 1, wherein the U-shaped clamping portion comprises a first clamping bar, a second clamping bar and an arc-shaped bar connecting the bottoms of the first and second clamping bars, and the top of the first or the second clamping bar is connected to a free end at the upper portion of the spring structure.

3. The fixing frame of halogen bulb light source according to claim 2, wherein the first and second clamping bars are individually composed of a first and second cross bars, a first and second inner vertical bars, a first and second slope bars, and a first and second outer vertical bars, and wherein the inner ends of the first and second cross bars are connected to the tops of the first and second inner vertical bars respectively, the lower ends of the first and second inner vertical bars are connected to the inner ends of the first and second slope bars respectively, the outer ends of the first and second slope bars are connected to the tops of the first and second outer vertical bars respectively, the bottoms of the first and second outer vertical bars are connected to two ends of the arc-shaped bar respectively, and the outer side of the first cross bar or the second cross bar is connected to a free end at the upper portion of the spring structure through a connection bar.

4. The fixing frame of halogen bulb light source according to claim 3, wherein the U-shaped clamping portion, the connection bar and the spring structure are all integrally formed by bending.

5. The fixing frame of halogen bulb light source according to claim 1, wherein the U-shaped clamping portion comprises a first clamping bar and a second clamping bar, a free end at the lower portion of the spring structure is connected to the lower end of a first spiral connection bar through a first connection bar, and the upper end of the first spiral connection bar is connected to the lower end of the first clamping bar, while a free end at the upper portion of the spring structure is connected to the lower end of a second spiral connection bar through a second connection bar, and the upper end of the second spiral connection bar is connected to the lower end of the second camping bar.

6. The fixing frame of halogen bulb light source according to claim 5, wherein the first and second clamping bars are individually composed of a first and second upper cross bars, a first and second inner vertical bars, a first and second slope bars, a first and second outer vertical bars, and a first and second lower cross bars, and wherein the inner ends of the first and second upper cross bars are connected to the tops of the first and second inner vertical bars respectively, the lower ends of the first and second inner vertical bars are connected to the inner ends of the first and second slope bars respectively, the outer ends of the first and second slope bars are connected to the tops of the first and second outer vertical bars respectively, the bottoms of the first and second outer vertical bars are connected to the outer ends of the first and second lower cross bars respectively, the upper end of the first spiral connection bar is connected to the inner end of the first lower cross bar, and the upper end of the second spiral connection bar is connected to the inner end of the second lower cross bar.

7. The fixing frame of halogen bulb light source according to claim 6, wherein the U-shaped clamping portion, the first connection bar, the second connection bar, the first spiral connection bar, the second spiral connection bar and the spring structure are all integrally formed by bending.

8. A bulb having the fixing frame of halogen bulb light source according to any of clams 1 to 7, comprising a stem, the fixing frame and a halogen bulb light source, the spring structure of the fixing frame is inserted into the stem, the U-shaped clamping portion of the fixing frame clamps the lower portion of the halogen bulb light source, and the halogen bulb light source is electrically connected to the stem.
